# EUROPÄISCHE PATENTSCHRIFT

(11) **EP 2 010 951 B1**
(45) Veröffentlichungstag und Bekanntmachung des Hinweises auf die Patenterteilung: **05.08.2009**
(21) Anmeldenummer: 07724436.6
(22) Anmeldetag: 20.04.2007
(51) Int. Cl.: G02B 6/44

(54) **OPTISCHES KABEL UND VERFAHREN ZUM HERSTELLEN EINES OPTISCHEN KABELS**
OPTICAL CABLE AND METHOD FOR PRODUCTION OF AN OPTICAL CABLE
CÂBLE OPTIQUE ET SON PROCÉDÉ DE PRODUCTION

(30) Priorität: 21.04.2006 DE 102006018536
(43) Veröffentlichungstag der Anmeldung: 07.01.2009
(73) Patentinhaber: CCS Technology, Inc., Wilmington, DE 19803 (US)
(72) Erfinder: STÖCKLEIN, Waldemar, 96450 Coburg (DE); MERBACH, Gerhard, 96465 Neustadt bei Coburg (DE); KNOCH, Horst, 96450 Coburg (DE)
(74) Vertreter: Epping - Hermann - Fischer
(86) Internationale Anmeldenummer: PCT/EP2007/003500
(87) Internationale Veröffentlichungsnummer: WO 2007/121950

(56) Entgegenhaltungen:
- WO-A-01/91135
- DE-A1- 19 712 253
- JP-A- 62 115 109
- US-A- 4 078 853

## Beschreibung

Die Erfindung betrifft ein optisches Kabel, das zum Einblasen in eine Leerröhre verwendbar ist. Des Weiteren betrifft die Erfindung ein Verfahren zur Herstellung eines optischen Kabels, das zum Einblasen in eine Leerröhre verwendbar ist.

Telekommunikationsbetreiber verwenden zum Aufbau von Zugangsnetzwerken (Access Networks) vorwiegend optische Kabel, die in dünne, vorinstallierte Leerrohre aus einem Kunststoffmaterial eingeblasen werden. Insbesondere werden als derartige optische Kabel so genannte Mikromodulkabel verwendet, bei denen die Kabelseele füllmassenfrei oder mit einem Gel gefüllt ausgebildet ist.

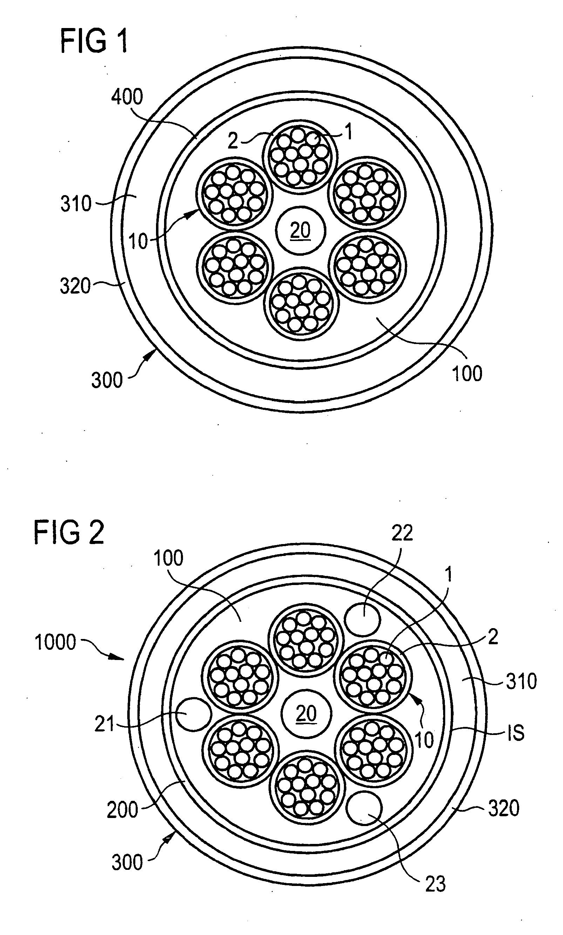

Figur 1 zeigt ein so genanntes trockenes Mikromodulkabel mit einer füllmassenfreien Kabelseele 100. Die Kabelseele weist ein zentral angeordnetes Garn 20 aus Polyester auf, um das mehrere optische Übertragungselemente 10, die als so genannte Mikromodule ausgebildet sind, angeordnet sind. Ein Mikromodul weist mehrere Lichtwellenleiter 1 auf, die von einer Hülle 2 aus einem Kunststoffmaterial umgeben sind. Der zentral angeordnete Faden 20 enthält ein quellfähiges Material, das bei Wasserkontakt eine Volumenvergrößerung des Fadens 20 bewirkt.

Des Weiteren ist die Kabelseele 100 von einem zu einer Hülle geformten Band 400 umgeben. Die Hülle 400 weist einen mehrlagigen Aufbau aus Garnen aus Polyester auf. Zwischen einzelnen Schichten des Polyestergewebes befindet sich ein quellbares SAP(Super Absorbent Polymer)-Material.

Beim Eindringen von Wasser in die Kabelseele 100 bewirken die SAP-Materialien ein Aufquellen der Hülle 400 und ein Aufquellen des Fadens 20. Dadurch wird verhindert, dass sich Wasser innerhalb der Kabelseele 100 entlang der optischen Übertragungselemente 10 ausbreitet, wodurch eine Verschlechterung die optischen Übertragungseigenschaften verhindert wird.

Über der Hülle 400 ist ein Kabelmantel 300 angeordnet. Neben der Funktion, die Ausbreitung von Wasser entlang der optischen Übertragungselemente in der Kabelseele zu verhindern, werden die optischen Übertragungselemente 10 durch die Hülle 400 von bei der Mantelextrusion auftretenden hohen Temperaturen geschützt.

Neben der in Figur 1 gezeigten trockenen Ausführungsform eines Mikromodulkabels, existieren auch Mikromodulkabel, bei denen die Kabelseele mit einem Gel gefüllt ist. Bei dieser Art von Kabel verhindert das Gel, das die optischen Übertragungselemente 10 umgibt, dass sich beim Eindringen von Feuchtigkeit Wasser entlang der Mikromodule 10 ausbreitet.

Nach dem Einblasen eines Mikromodulkabels in eine Leerröhre, werden die einzelnen Lichtwellenleiter des Mikromodulkabels mit Lichtwellenleitern eines anderen Mikromodulkabels oder mit einer sonstigen Hardware-Einrichtung verspleißt. Die Kabelenden des Mikromodulkabel müssen zum Anschluss an die Hardware geeignet vorbereitet werden. Zum Freilegen der Lichtwellenleiter wird zunächst der Kabelmantel abgesetzt. Die Kabelseele des Mikromodulkabels ist danach noch von dem Polyestergewebe der Hülle 400 umgeben. Die Hülle 400 wird im Allgemeinen dadurch entfernt, indem das Gewebe mit einem Schneidewerkzeug abgeschnitten wird. Bei einem mit Gel gefüllten optische Kabel werden in einem nächsten Schritt die freigelegten Lichtwellenleiter mit einem Lösungsmittel von dem Gel gereinigt.

Bei einem trockenen Mikromodulkabel entfällt die Reinigung der zu spleißenden Lichtwellenleiter von dem Gel, sodass bei dieser Art von Kabel bereits Zeit zur Vorbereitung des Mikromodulkabels für den Spleißvorgang eingespart werden kann. Es ist jedoch weiterhin erforderlich, nach dem Absetzen des Kabelmantels die quellfähige Hülle 400 mit einem Messer oder einer Schere zu entfernen. Neben dem dazu erforderlichen Zeitaufwand ist mit dem Abschneiden der Hülle 400 immer auch ein Risiko zur Verletzung der Lichtwellenleiter gegeben.

Aus der DE 197 12 253, der US 4078 853, JP 62 115 109, und der WO01/91135 sind änhliche kabel mit einer Papiervhülle bekannt. Die Aufgabe der vorliegenden Erfindung ist es, ein optisches Kabel anzugeben, das gute Verarbeitungseigenschaften bei der Vorbereitung des optischen Kabels für einen Spleißvorgang aufweist. Eine weitere Aufgabe der vorliegenden Erfindung ist es, ein Verfahren zur Herstellung eines optischen Kabels anzugeben, das gute Verarbeitungseigenschaften bei der Vorbereitung des optischen Kabels für einen Spleißvorgang, aufweist.

Die Aufgabe in Bezug auf das optische Kabel wird durch ein optisches Kabel mit einer Kabelseele mit mehreren optischen Übertragungselementen, die mindestens einen Lichtwellenleiter enthalten, mit einer ersten Hülle aus einem Papier enthaltenden Material, wobei die erste Hülle die mehreren optischen Übertragungselemente umgibt, mit mindestens einem Garn, das in einem Bereich der Kabelseele zwischen der ersten Hülle und den mehreren optischen Übertragungselementen angeordnet ist, wobei das mindestens eine Garn ein wasserquellfähiges Material aufweist und mit einem Kabelmantel, der die erste Hülle umgibt und ein Material aus einem Kunststoff enthält, gelöst.

Gemäß einer Weiterbildung des optischen Kabels weist das Papier eine Reißfestigkeit auf, die weniger als 16 N/mm2 beträgt. In einer bevorzugten Ausführungsform weist das Papier eine Reißfestigkeit auf, die mehr als 13 N/mm2 beträgt.

Bei einer anderen Ausführungsform des optischen Kabels weist das optische Kabel einen Durchmesser auf, der weniger als 6,5 mm beträgt. In einer bevorzugten Ausführungsform des optischen Kabels weist das optische Kabel einen Durchmesser auf, der mehr als 3,5 mm beträgt.

In einer anderen Ausgestaltungsform des optischen Kabels weist das optische Übertragungselement mehrere Lichtwellenleiter auf, die von einer zweiten Hülle umgeben sind. Die zweite Hülle des optischen Übertragungselements kann aus einem Material aus einem Kunststoff ausgebildet sein.

Eine andere Ausführungsform des optischen Kabels sieht vor, dass die Kabelseele als eine füllmassenfreie Kabelseele ausgebildet ist.

Bei einer weiteren Ausgestaltungsform des optischen Kabels weist die Kabelseele ein zentral angeordnetes Garn auf, um das die mehreren optischen Übertragungselemente angeordnet sind. Das zentral angeordnete Garn kann ein wasserquellfähiges Material aufweisen. Das mindestens eine Garn, das zwischen den optischen Übertragungselementen und der ersten Hülle angeordnet ist, und/oder das zentral angeordnete Garn kann als ein Faden aus Polyester ausgebildet sein.

Gemäß einer anderen Ausführungsform des optischen Kabels enthält das quellfähige Material ein Acrylat. Das quellfähige Material kann auch ein Salz aus einer Acrylsäure enthalten.

Eine weitere Ausführungsform des optischen Kabels sieht vor, dass der Kabelmantel mindestens zwei Schichten aufweist. Bei einer Ausführungsform des optischen Kabels enthält eine erste der mindestens zwei Schichten des Kabelmantels, die an die erste Hülle angrenzt, Polycarbonat. Bei einer anderen Ausführungsform des optischen Kabels enthält eine erste der mindestens zwei Schichten des Kabelmantels, die an die erste Hülle angrenzt, ein Polymerblend. In einer bevorzugten Ausführungsform enthält eine zweite der mindestens zwei Schichten des Kabelmantels, die an die erste Schicht der mindestens zwei Schichten des Kabelmantels angrenzt High-Density-Polyethylen. Gemäß einer Weiterbildung des optischen Kabels enthält eine zweite der mindestens zwei Schichten des Kabelmantels, die an die erste Schicht der mindestens zwei Schichten des Kabelmantels angrenzt, Polyamid. Eine zweite der mindestens zwei Schichten des Kabelmantels, die an die erste Schicht der mindestens zwei Schichten des Kabelmantels angrenzt, enthält bei einer weiteren Ausgestaltungsform Polyurethan.

Ein optisches Kabel, das nach den oben angegebenen Merkmalen ausgebildet ist, kann bevorzugt zum Einblasen in eine Leerröhre verwendet werden.

Ein Verfahren zum Herstellen eines optischen Kabels sieht das Bereitstellen einer Kabelseele mit mehreren optischen Übertragungselementen, die jeweils mindestens einen Lichtwellenleiter enthalten, vor, wobei um die mehreren optischen Übertragungselemente mindestens ein Garn angeordnet ist, das jeweils ein wasserquellfähiges Material enthält. Die Kabelseele wird mit der ersten Hülle umgeben, die ein Material aus Papier enthält. Ein Kabelmantel aus einem Material aus einem Kunststoff wird um die erste Hülle extrudiert.

Gemäß einer Weiterbildung des Verfahrens wird das Band mit einer Reißfestigkeit bereitgestellt, die weniger als 16 N/mm2 beträgt. Bei einer anderen Ausführungsform des Verfahrens wird das Band mit einer Reißfestigkeit bereitgestellt, die mehr als 13 N/mm2 beträgt.

Bei einer anderen Ausführungsform des Verfahrens wird das mindestens eine optische Übertragungselement bereitgestellt, indem mehrere des mindestens einen Lichtwellenleiters in einer zweiten Hülle angeordnet werden, die ein Material aus einem Kunststoff enthält. Bei einer Weiterbildung des Verfahrens wird die Kabelseele bereitgestellt, indem mehrere des mindestens einen optischen Übertragungselements um ein Garn angeordnet werden, das ein wasserquellfähiges Material aufweist.

Gemäß eines weiteren Merkmals des Verfahrens wird die Kabelseele als eine füllmassenfreie Kabelseele bereitgestellt.

Vorzugsweise wird das Band aus dem Material aus Papier mittels eines Formrohrs zu der ersten Hülle geformt.

Eine andere Ausführungsform des Verfahrens sieht vor, dass beim Extrudieren des Kabelmantels eine erste Schicht aus Polycarbonat um die erste Hülle und eine zweite Schicht aus High-Density-Polyethylen um die erste Schicht des Kabelmantels extrudiert wird.

Weitere Ausführungsformen betreffend das optische Kabel sowie das Verfahren zum Herstellen des optischen Kabels sind den Unteransprüchen zu entnehmen.

Die Erfindung wird im Folgenden anhand von Figuren, die Ausführungsbeispiele der vorliegenden Erfindung zeigen, näher erläutert.

### Es zeigen:

- Figur 1: eine Ausführungsform eines optischen Kabels,
- Figur 2: eine weitere Ausführungsform eines optischen Kabels,
- Figur 3: eine Anordnung zum Herstellen eines optischen Kabels.

Figur 2 zeigt ein optisches Kabel 1000, das als ein Mikromodulkabel ausgebildet ist und zum Einblasen in eine Leerröhre verwendbar ist. Das in Figur 2 gezeigte Mikromodulkabel lässt sich insbesondere zum Aufbau eines Zugangsnetzwerkes (Access-Network) verwenden. Beim Aufbau derartiger Kabelnetzwerke werden die optischen Kabel in dünne, vorinstallierte Leerröhren aus einem Material aus einem Kunststoff eingeblasen.

Wie in Figur 2 gezeigt, umfasst das optische Kabel 1000 eine Kabelseele 100, die ein Garn 20 enthält, das in der Kabelseele 100 zentral angeordnet ist. Das Garn weist ein Gewebe aus Polyester auf, das mehrere Lagen enthält. Zwischen den einzelnen Lagen befindet sich ein quellbares Material (SAP-Material), das im Allgemeinen in Pulverform zwischen die Schichten des Gewebes eingebettet ist. Das quellfähige Material enthält ein Acrylat beziehungsweise Salze aus einer Acrylsäure. Diese Substanzen bewirken bei einem Kontakt mit Wasser ein Aufquellen des Garns.

Das zentral angeordnete Garn 20 ist von optischen Übertragungselementen 10 umgeben. Jedes optische Übertragungselement ist als Mikromodul ausgebildet, welches jeweils mehrere Lichtwellenleiter 1 enthält, die von einer Hülle 2 aus einem Kunststoffmaterial umgeben sind. Die Kabelseele 100 des Mikromodulkabels ist als eine füllmassenfreie Kabelseele ausgebildet. Um die optischen Übertragungselemente 10 sind weitere Fäden 21, 22 und 23 angeordnet, die ebenso wie das zentral angeordnete Garn 20 ein quellbares Material enthalten, das bei Wasserkontakt eine Vergrößerung des Volumens der Fäden bewirkt.

Die Kabelseele 100 ist von einer Hülle 200 umgeben, die ein Material aus einem Papier enthält. Das Papier enthält mechanisch oder chemisch aufgeschlossene Fasern meist pflanzlicher Herkunft. Diese sind zunächst in einer wässrigen Suspension miteinander verbunden und werden unter Zusatz von Hilfsstoffen durch Entwässerung auf einem Sieb verfestigt. Das Papier kann gebleichte oder ungebleichte Zellstoffe enthalten. Als Papiermaterial wird bevorzugt ein Seidenpapier verwendet, das ein Flächengewicht von bis zu 30g/m² aufweist. Des Weiteren weist das Papier der Hülle vorzugsweise eine Festigkeit zwischen 13 Newton pro Quadratmillimeter und 16 Newton pro Quadratmillimeter auf.

Die Hülle aus dem Papier ist von einem Kabelmantel 300 umgeben. Der Kabelmantel 300 weist bevorzugt zwei Schichten 310 und 320 auf. Die Schicht 310 kann ein Polycarbonat enthalten, während die Schicht 320 vorzugsweise High-Density-Polyethylen enthält. Es ist auch möglich, als Material für die Schicht 310 des Kabelmantels ein Polymerblend zu verwenden. Das Polymerblend stellt eine molekular verteilte oder mikroskopisch dispergierte Kunststoff-Legierung dar. Die Schicht 310 des Kabelmantels kann auch Polyamid enthalten.

Die Schichten 310 und 320 des Kabelmantels 300 werden im Rahmen eines Extrusionsvorganges um die Kabelseele 100 und die Papierhülle 200 extrudiert. Die Papierhülle 200 liegt danach an einer Innenseite IS der Schicht 310 des Kabelmantels 300 an. Die Hülle 200 aus dem Papier fungiert als eine Wärmebarriere, die verhindert, dass die bei der Extrusion auftretenden hohen Temperaturen auf die optischen Übertragungselemente 10 der Kabelseele 100 übertragen werden. Dadurch wird vermieden, dass beim Extrudieren des Kabelmantels 300 die Mikromodule 10 untereinander beziehungsweise mit dem Kabelmantel verkleben.

Die Kabelseele 100 ist bevorzugt als eine füllmassenfreie Kabelseele ausgebildet. Da das Papier der Hülle 200 nur begrenzt quellfähig ist, sind in der Kabelseele 100 das Garn 20 sowie die um die Mikromodule angeordneten Fäden 21, 22 und 23 angeordnet. Beim Eindringen von Wasser in die Kabelseele bewirken die quellfähigen Substanzen, die in dem zentral angeordneten Garn 20 und in den umfänglich angeordneten Fäden 21, 22 und 23 enthalten sind, eine Volumenvergrößerung des Garns beziehungsweise der Fäden, sodass die optischen Übertragungselemente von dem aufgequollenen Garn 20 beziehungsweise den aufgequollenen Fäden 21, 22 und 23 umgeben sind und somit vor Feuchtigkeit geschützt sind.

Das Vorsehen einer Hülle 200 aus Papier weist gegenüber dem bisher verwendeten Band 400 aus Polyester insbesondere Vorteile bei der Vorbereitung des optischen Kabels für einen Spleißvorgang auf. Zum Freilegen der Lichtwellenleiter wird bei der in Figur 2 gezeigten Ausführungsform des optischen Kabels zunächst der Kabelmantel 300 mit einem Schneidewerkzeug angeritzt. Das optische Kabel wird anschließend an der geritzten Stelle des Kabelmantels 300 gebogen und gezogen. Dadurch bricht das Kunststoffmaterial der rohrförmige Hülle des Kabelmantels 300, sodass das Ende der rohrförmigen Hülle ausgehend von der angeritzten Stelle mit geringem Kraftaufwand von der Kabelseele 100 abgezogen werden kann.

Aufgrund der Festigkeit der Hülle 200, die zwischen dreizehn Newton pro Quadratmillimeter und sechzehn Newton pro Quadratmillimeter liegt, reißt auch die Papierhülle und kann somit gleichzeitig entfernt werden. Das bisher erforderliche Abschneiden der Hülle aus dem Polyestermaterial ist bei der in Figur 2 gezeigten Ausführungsform des optischen Kabels nicht mehr erforderlich. Dadurch wird bei der Vorbereitung eines Mikromodulkabels für einen Spleißvorgang die dazu notwendige Zeit verringert und das Risiko einer Verletzung der Mikromodule beziehungsweise Lichtwellenleite reduziert.

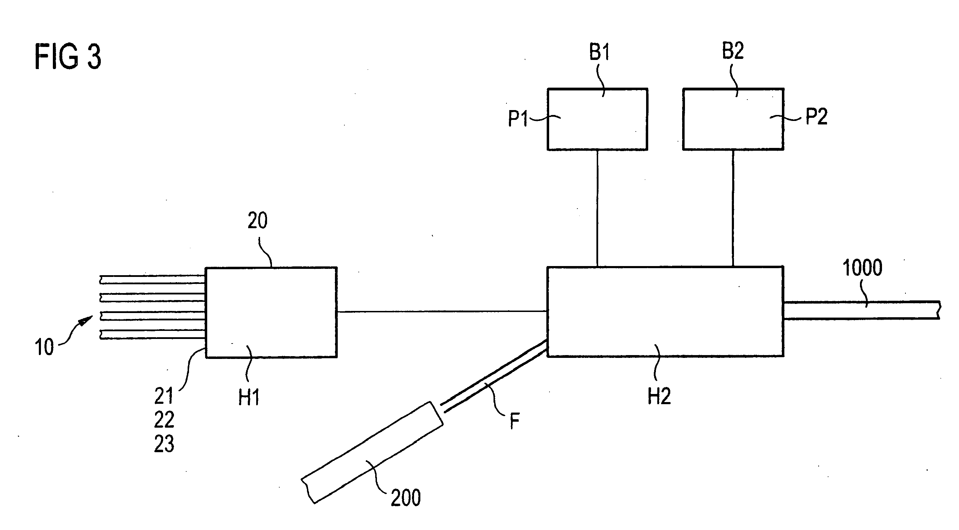

Im Folgenden wird ein Verfahren zur Herstellung eines optischen Kabels angegeben, das zum Einblasen in eine Leerröhre verwendbar ist. Figur 3 zeigt dazu eine vereinfachte Ausführungsform einer Herstellungslinie zur Fertigung eines Mikromodulkabels. Einer Herstellungseinheit H1 werden optische Übertragungselemente in Form von Mikromodulen 10 zugeführt. Ein Mikromodul weist ein Glasfaserbündel aus mehreren Lichtwellenleitern 1 auf, die von einer dünnen Hülle 2 aus einem Material aus einem Kunststoff umgeben sind. Des Weiteren werden der Herstellungseinheit H1 Garne 20, 21, 22 und 23 zugeführt, die ein quellfähiges Material enthalten, das bei Wasserkontakt eine Volumenvergrößerung.der Garne bewirkt. Die Herstellungseinheit H1 ist derart ausgebildet, dass die Mikromodule 10 um das Garn 20 angeordnet werden. Des Weiteren werden die Garne 21, 22 und 23 in der Herstellungseinheit H1 um die optischen Übertragungselemente 10, wie in Figur 2 gezeigt, angeordnet.

Die Kabelseele 100, die die Mikromodule 10 und die Quellgarne 20, 21, 22 und 23 umfasst, wird anschließend einer Herstellungseinheit H2 zugeführt. An die Herstellungseinheit H2 ist ein Formrohr F angeschlossen. Dem Formrohr F wird eingangsseitig ein Band aus einem Papiermaterial zugeführt, das in einer Ausführungsform des optischen Kabels eine Dicke von circa 0,05 Millimeter und eine Breite von circa 13 Millimetern aufweist. Ein derartiges Papierband ist zur Fertigung eines Mikromodulkabels mit einem Außendurchmesser von circa 6 Millimetern geeignet.

Die Herstellungseinheit H2 ist mit einem Behälter B1 verbunden, in dem sich ein Polymer P1 befindet. Des Weiteren ist die Herstellungseinheit H2 mit einem Behälter B2 verbunden, in dem sich ein Material aus einem Polymer P2 befindet. Zunächst wird das Polymermaterial in dem Behälter B1 erwärmt und als Schicht 310 um die Hülle 200 aus Papier extrudiert. Als Polymermaterial wird bevorzugt Polycarbonat verwendet.

Anschließend wird das Polymergemisch P2, das sich in dem Behälter B2 befindet, erwärmt und als äußere Schicht 320 um die innere Schicht 310 des Kabelmantels extrudiert. Die Hülle 200 aus dem Papier wirkt dabei als thermische Trennschicht, die verhindert, dass die Hüllen 2 der Mikromodule aufgrund der beim Extrusionsvorgang auftretenden hohen Temperaturen gegeneinander verkleben. Nach Erkalten der Mantelschichten 310 und 320 bildet der Kabelmantel eine rohrförmige Hülle, in dem die Mikromodule 10 angeordnet sind. Die Hülle 200 aus Papier liegt an der Innenseite IS der inneren Schicht 310 des Kabelmantels an. Derart gefertigte optische Kabel weisen einen Durchmesser zwischen 3,5 Millimeter und 6,5 Millimeter auf.

### Bezugszeichenliste

- 1: Lichtwellenleiter
- 2: Hülle
- 10: optisches Übertragungselement
- 100: Kabelseele
- 200: Hülle
- 300: Kabelmantel
- 310, 320: Schichten des Kabelmantels
- 20: zentral angeordnetes Quellgarn
- 21, 22, 23: Quellfäden
- 400: Hülle

## Patentansprüche

1. Optisches Kabel, umfassend:
- eine Kabelseele (100) mit mehreren optischen Übertragungselementen (10), die jeweils mindestens einen Lichtwellenleiter (1) enthalten,
- eine erste Hülle (200) aus einem Papier enthaltenden Material, wobei die erste Hülle (200) die mehreren optischen Übertragungselemente (10) umgibt,
- mindestens ein Garn (21, 22, 23),
wobei das mindestens eine Garn ein wasserquellfähiges Material aufweist,
- einen Kabelmantel (300), der die erste Hülle (200) umgibt und ein Material aus einem Kunststoff enthält.
**dadurch gekenzeichnet, dass** das mindestens eine Garn in einem Bereich der Kabelseele (100) zwischen der ersten Hülle (200) und den mehreren optischen Übertragungselementen (10) angeordnet ist.

2. Optisches Kabel nach Anspruch 1,
wobei das Papier eine Reißfestigkeit aufweist, die mehr als 13 Newton pro Quadratmillimeter und weniger als 16 Newton pro Quadratmillimeter beträgt.

3. Optisches Kabel nach einem der Ansprüche 1 oder 2,
wobei das optische Kabel einen Durchmesser, der mehr als 3,5 Millimeter und weniger als 6,5 Millimeter beträgt, aufweist.

4. Optisches Kabel nach einem der Ansprüche 1 bis 3,
wobei die optischen Übertragungselemente (10) jeweils mehrere Lichtwellenleiter (1) aufweisen, die von jeweils einer zweiten Hülle (2) umgeben sind.

5. Optisches Kabel nach einem der Ansprüche 1 bis 4,
wobei die Kabelseele (100) als eine füllmassenfreie Kabelseele (100) ausgebildet ist.

6. Optisches Kabel nach einem der Ansprüche 1 bis 5,
wobei die Kabelseele (100) ein zentral angeordnetes Garn (20) aufweist, um das die mehreren optischen Übertragungselemente (10) angeordnet sind.

7. Optisches Kabel nach Anspruch 6,
wobei das zentral angeordnete Garn (20) ein wasserquellfähiges Material aufweist.

8. Optisches Kabel nach einem der Ansprüche 1 bis 7,
wobei der Kabelmantel (300) mindestens zwei Schichten (310, 320) aufweist.

9. Optisches Kabel nach Anspruch 8,
wobei eine erste der mindestens zwei Schichten (310) des Kabelmantels (300), die an die erste Hülle (200) angrenzt, Polycarbonat oder ein Polymerblend enthält.

10. Optisches Kabel nach einem der Ansprüche 8 oder 9,
wobei eine zweite der mindestens zwei Schichten (320) des Kabelmantels (300), die an die erste Schicht (310) der mindestens zwei Schichten des Kabelmantels (300) angrenzt, High-Density-Polyethylen oder Polyamid oder Polyurethan enthält.

11. Verwenden eines optischen Kabels nach einem der Ansprüche 1 bis 10 zum Einblasen in eine Leerröhre.

12. Verfahren zum Herstellen eines optischen Kabels, umfassend die folgenden Schritte:
- Bereitstellen einer Kabelseele (100) mit mehreren optischen Übertragungselementen (10), die jeweils mindestens einen Lichtwellenleiter (1) enthalten, wobei um die mehreren optischen Übertragungselemente (10) mindestens ein Garn (21, 22, 23) angeordnet ist, das jeweils ein wasserquellfähiges Material enthält,
- Umgeben der Kabelseele (100) mit der ersten Hülle (200), die ein Material aus Papier enthält,
- Extrudieren eines Kabelmantels (300) aus einem Material aus einem Kunststoff um die erste Hülle (200).

13. Verfahren nach Anspruch 12,
bei dem das Band mit einer Reißfestigkeit bereitgestellt wird, die mehr als 13 Newton pro Quadratmillimeter und weniger als 16 Newton pro Quadratmillimeter beträgt.

14. Verfahren nach einem der Ansprüche 12 oder 13, bei dem die Kabelseele (100) bereitgestellt wird, indem die mehreren optischen Übertragungselemente (10) um ein zentral angeordnetes Garn (20) angeordnet werden, das ein wasserquellfähiges Material aufweist.

15. Verfahren nach einem der Ansprüche 12 bis 14,
bei dem beim Extrudieren des Kabelmantels (300) eine erste Schicht (310) aus Polycarbonat um die erste Hülle (200) und eine zweite Schicht (320) aus High-Density-Polyethylen um die erste Schicht (310) des Kabelmantels (300) extrudiert wird.

## Claims

1. An optical cable, comprising:
- a cable core (100) with several optical transmission elements (10), which respectively contain at least one optic fiber (1),
- a first sleeve (200) made from a material containing paper, the first sleeve (200) surrounding the several optical transmission elements (10),
- at least one yarn (21, 22, 23), the at least one yarn comprising a swellable material, and
- a cable jacket (300), which surrounds the first sleeve (200) and contains a plastics material,
**characterized in that** the at least one yarn is arranged in a region of the cable core (100) between the first sleeve (200) and the several optical transmission elements (10).

2. The optical cable as claimed in claim 1, the paper having a tear strength which is more than 13 newtons per square millimetre and less than 16 newtons per square millimeter.

3. The optical cable as claimed in one of claims 1 to 2, the optical cable having a diameter which is more than 3.5 millimeters and less than 6.5 millimeters.

4. The optical cable as claimed in one of claims 1 to 3, the optical transmission elements (10) respectively having several optic fibers (1), which are each surrounded by a second sleeve (2).

5. The optical cable as claimed in one of claims 1 to 4, the cable core (100) being formed as a cable core (100) without any filling compound.

6. The optical cable as claimed in one of claims 1 to 5, the cable core (100) having a centrally arranged yarn (20), around which the several optical transmission elements (10) are arranged.

7. The optical cable as claimed in claim 6, the centrally arranged yarn (20) comprising a water-swellable material.

8. The optical cable as claimed in one of claims 1 to 7, the cable jacket (300) having at least two layers (310, 320).

9. The optical cable as claimed in claim 8, a first of the at least two layers (310) of the cable jacket (300), which is adjacent the first sleeve (200), containing polycarbonate or a polymer blend.

10. The optical cable as claimed in one of claims 8 or 9, a second of the at least two layers (320) of the cable jacket (300), which is adjacent the first layer (310) of the least two layers of the cable jacket (300), containing high-density polyethylene or polyamide or polyurethane.

11. The use of an optical cable as claimed in one of claims 1 to 10 for blowing into an empty tube.

12. A method for the production of an optical cable, comprising the following steps:
- providing a cable core (100), with several optical transmission elements (10), which respectively contain at least one optic fiber (1), at least one yarn (21, 22, 23), which respectively contains a water-swellable material, being arranged around the several optical transmission elements (10),
- surrounding the cable core (100) with the first sleeve (200), which contains a paper material,
- extruding a plastic jacket (300) made from a plastics material around the first sleeve (200).

13. The method as claimed in claim 12, in which the strip is provided with a tear strength which is more than 13 newtons per square millimeter and less than 16 newtons per square millimeter.

14. The method as claimed in one of claims 12 or 13, in which the cable core (100) is provided by the several optical transmission elements (10) being arranged around a centrally arranged yarn (20), which comprises a water-swellable material.

15. The method as claimed in one of claims 12 to 14, in which, when the cable jacket (300) is extruded, a first layer (310) of polycarbonate is extruded around the first sleeve (200) and a second layer (320) of high-density polyethylene is extruded around the first layer (310) of the cable jacket (300).

## Revendications

1. Câble optique comprenant :
- une âme (100) de câble ayant plusieurs éléments (10) optiques de transmission, qui contiennent respectivement au moins une fibre (1) optique,
- une première enveloppe (200) en un matériau contenant du papier, la première enveloppe (200) entourant les plusieurs éléments (10) optiques de transmission,
- au moins un fil (21, 22, 23), le au moins un fil ayant un matériau susceptible de gonfler à l'eau,
- une gaine (300) de câble, qui entoure la première enveloppe (200) et qui contient un matériau en une matière plastique,
**caractérisé en ce que** l'au moins fil est disposé dans une zone de l'âme (100) du câble entre la première enveloppe (200) et les plusieurs éléments (10) optiques de transmission.

2. Câble optique suivant la revendication 1,
dans lequel le papier a une résistance à la déchirure, qui est supérieure à 13 newtons par millimètre carré et inférieure à 16 newtons par millimètre carré.

3. Câble optique suivant la revendication 1 ou 2,
dans lequel le câble optique a un diamètre qui est supérieur à 3,5 millimètres et inférieur à 6,5 millimètres.

4. Câble optique suivant l'une des revendications 1 à 3,
dans lequel les éléments (10) optiques de transmission ont respectivement plusieurs fibres (1) optiques qui sont entourées par respectivement une deuxième enveloppe (2).

5. Câble optique suivant l'une des revendications 1 à 4,
dans lequel l'âme (100) du câble est sous la forme d'une âme (100) de câble exempte de composition de remplissage.

6. Câble optique suivant l'une des revendications 1 à 5,
dans lequel l'âme (100) du câble a un fil (20) disposé de manière centrale et autour duquel les plusieurs éléments (10) optiques de transmission sont disposés.

7. Câble optique suivant la revendication 6,
dans lequel le fil (20) disposé d'une manière centrale a un matériau susceptible de gonfler à l'eau.

8. Câble optique suivant l'une des revendications 1 à 7,
dans lequel la gaine (300) de câble a au moins deux couches (310, 320).

9. Câble optique suivant la revendication 8,
dans lequel une première des au moins deux couches (310) de la gaine (300) de câble, qui est voisine de la première enveloppe (200), contient du polycarbonate ou un mélange de polymères.

10. Câble optique suivant la revendication 8 ou 9,
dans lequel une deuxième des au moins deux couches (320) de la gaine (300) du câble, qui est voisine de la première couche (310) des au moins deux couches de la gaine (300) de câble, contient du polyéthylène haute densité ou du polyamide ou du polyuréthane.

11. Utilisation d'un câble optique suivant l'une des revendications 1 à 10 pour l'insufflation dans un tube sous vide.

12. Procédé de fabrication d'un câble optique comprenant les stades suivantes :
- on se procure une âme (100) de câble ayant plusieurs éléments (10) optiques de transmission qui contiennent respectivement au moins une fibre (1) optique, au moins un fil (21, 22, 23) qui contient respectivement un matériau susceptible de gonfler à l'eau étant disposé autour des plusieurs éléments (10) optiques de transmission,
- on entoure l'âme (100) du câble de la première enveloppe (200) qui contient un matériau en papier,
- on extrude une gaine (300) de câble en un matériau en une matière plastique autour de la première enveloppe (200).

13. Procédé suivant la revendication 12,
dans lequel on prépare le ruban en lui donnant une résistance à la déchirure qui est supérieure à 13 newtons par millimètre carré et inférieure à 16 newtons par millimètre carré.

14. Procédé suivant la revendication 12 ou 13,
dans lequel on se procure l'âme (100) du câble en disposant les plusieurs éléments (10) optiques de transmission autour d'un fil (20) disposé centralement et ayant un matériau susceptible de gonfler à l'eau.

15. Procédé suivant l'une des revendications 12 à 14,
dans lequel, lors de l'extrusion de la gaine (300) du câble, on extrude une première couche (310) en polycarbonate autour de la première enveloppe (200) et une deuxième couche (320) en polyéthylène haute densité autour de la première couche (310) de la gaine (300) du câble.
